# EUROPÄISCHE PATENTSCHRIFT

(11) **EP 2 847 930 B1**
(45) Veröffentlichungstag und Bekanntmachung des Hinweises auf die Patenterteilung: **12.04.2017**
(21) Anmeldenummer: 13721748.5
(22) Anmeldetag: 08.05.2013
(51) Int. Cl.: H04L 12/12, H04L 12/407, H04L 12/40

(54) **VERFAHREN ZUM ÜBERTRAGEN VON DATEN MIT EINEM ETHERNET-AVB-TRANSPORTPROTOKOLL ZWISCHEN KNOTEN EINES KRAFTFAHRZEUGS SOWIE ZUR DURCHFÜHRUNG DES VERFAHRENS EINGERICHTETES STEUERGERÄT**
METHOD FOR TRANSMITTING DATA BETWEEN NODES OF A MOTOR VEHICLE USING AN ETHERNET-AVB TRANSPORT PROTOCOL AND CONTROL UNIT CONFIGURED TO CARRY OUT SAID METHOD
PROCÉDÉ POUR TRANSMETTRE DES DONNÉES AU MOYEN D'UN PROTOCOLE DE TRANSPORT AVB ETHERNET ENTRE DES NOEUDS D'UN VÉHICULE À MOTEUR AINSI QU'UN APPAREIL DE COMMANDE CONÇU POUR LA MISE EN OEUVRE DE CE POCÉDÉ

(30) Priorität: 11.05.2012 DE 102012207883
(43) Veröffentlichungstag der Anmeldung: 18.03.2015
(73) Patentinhaber: Continental Automotive GmbH, 30165 Hannover (DE)
(72) Erfinder: BALBIERER, Norbert, 93309 Kelheim (DE); NÖBAUER, Josef, 92445 Neukirchen-Balbini (DE); ZINNER, Helge, 98646 Straufhain (DE)
(86) Internationale Anmeldenummer: PCT/EP2013/059630
(87) Internationale Veröffentlichungsnummer: WO 2013/167679

(56) Entgegenhaltungen:
- US-A1- 2010 110 952
- US-A1- 2011 022 699
- "JNF Ethernet AVB Technology Assessment Report ; avb-fuller-ethernet-technology-assessment- 0709-v01", IEEE DRAFT; AVB-FULLER-ETHERNET-TECHNOLOGY-ASSESSMENT- 0709-V01, IEEE-SA, PISCATAWAY, NJ USA, Bd. 802.1, Nr. v01, 14. Juli 2009 (2009-07-14), Seiten 1-10, XP017642644, [gefunden am 2009-07-14]

## Beschreibung

Die Erfindung betrifft ein Verfahren zum Übertragen von Daten mit einem Ethernet-AVB-Transportprotokoll zwischen Knoten eines Kraftfahrzeugs, die insbesondere zumindest teilweise auch als Steuergeräte des Kraftfahrzeugs ausgebildet sein können. Bei der Übertragung von Daten mittels des Ethernet-AVB-Transportprotokolls ist vorgesehen, dass in zyklischen Abständen Daten über ein Ethernet-basiertes Netzwerk durch Eingeben der Daten in einen auch als MAC-Frame genannten Übertragungsrahmen und Weiterleitung an lokale Sender eines Knotens des Kraftfahrzeugs ausgesendet werden. Im Rahmen des AVB-Transportprotokolls ist vorgesehen, dass vor einem Senden der Daten die für das Übertragen der Daten erforderlichen Ressourcen, insbesondere die Datenrate und Senderate, mittels Reservierungsnachrichten eines eigenen (separaten) Protokolls, insbesondere des sogenannten MSRP (Multiple Stream Reservation Protocol), reserviert werden, wobei der Datenfluss aus einem Knoten, insbesondere bei der Reservierung mittels des sogenannten Traffic-Shapings, auf eine bestimmte Senderate und/oder Datenrate eingestellt wird.

Gemäß dem Verfahren ist vorgesehen, die lokalen Sender und Empfänger eines Knotens, welche auch als PHY-Geräte bezeichnet werden und insbesondere die bitweise Datenübertragung in der physikalischen Schicht bzw. Bitübertragungsschicht erledigen, in Nicht-Nutzungsperioden, in denen keine Daten zu übertragen sind, deaktiviert werden und sofern in einem Übertragungsrahmen (MAC-Frame) einer vorgelagerten Schicht, insbesondere der sogenannten MAC-Schicht, Daten zur Übertragung anstehen, wieder aktiviert werden, wobei die lokalen Sender und Empfänger (PHY-Geräte) nach einer Aktivierungszeit zur Übertragung zur Verfügung stehen.

Neben den typischen Bussystemen im Automobilbereich, wie beispielsweise CAN-Bus, FlexRay oder dergleichen, hält auch der nach einem Ethernet-Transportprotokoll funktionierende Feldbuszunehmend Einzug in das Kraftfahrzeug. Das Ethernet, d. h. ein nach dem Ethernet-Transportprotokoll funktionierendes Netzwerk, welches üblicherweise kabelgebunden ist, verfügt über eine hohe Datenrate, ist in hohem Maße flexibel und weltweit standardisiert. Daher wird sich das Ethernet auch in den nächsten Jahren als wichtige Systemschnittstelle eines Kraftfahrzeugs darstellen.

Durch die zunehmende Elektrifizierung der Kraftfahrzeuge steigt jedoch auch deren Strombedarf zunehmend an. Dies wiederum führt zu einem erhöhten Kraftstoffverbrauch, der sich kostenmäßig direkt auf den Endverbraucher umlegt. Weiterhin wird die heutige Besteuerung eines Kraftfahrzeugs aufgrund des Ausstoßes von CO₂ (Kohlendioxid) errechnet, was sich wiederum aus dem Energieverbrauch an Kraftstoff ableiten lässt. Die Reichweite eines elektrisch betriebenen Fahrzeugs ist zudem an die Kapazität der Batterie und damit den Strombedarf der in dem Kraftfahrzeug angeschlossenen Verbraucher gekoppelt.

Die lokalen Sender und Empfänger (PHY-Geräte), welche auch als Ethernet-Transceiver bzw. Ethernet-Sendeempfänger bezeichnet werden, weisen in einem üblichen Netzwerkbetrieb einen konstanten Strombedarf auf, der unabhängig von der Auslastung der Verbindung in der Datenübertragung ist, da sogenannte IDLE-Codegruppen gesendet werden, wenn über die Datenverbindung keine Nutzdaten zu übertragen sind.

Ein neuer Standard IEEE 802.3az (auch als Energy Efficient Ethernet - EEE bezeichnet) stellt Erweiterungen zur Verfügung, um in den lokalen Sendern und den Empfängern auf der anderen Seite der Kommunikationsverbindungen das Übersenden von IDLE-Codegruppen während der Perioden ohne Nutzdatenübertragung zu deaktivieren, anstatt die IDLE-Codegruppen weiter zu senden. Diese Deaktivierung wird auch als Low Power Idle - LPI (Energiesparmodus) bezeichnet. Hierdurch kann der Strombedarf in der die eigentliche Datenübertragung physikalisch realisierenden Bitübertragungsschicht reduziert werden.

Durch den vorgenannten Standard ist auch die minimale Übergangszeit zwischen dem Normalzustand der Ethernet-Transceiver, in denen eine Datenübertragung stattfinden kann, und dem deaktivierten Modus (LPI) festgelegt. Dabei ist die Zeit für das Aufwachen bzw. Aktivieren eines Senders und/oder Empfängers aus dem Energiesparmodus (LPI) mit 30 µs spezifiziert. Diese Zeit wird als Aufwach- oder Aktivierungszeit T_{w} bezeichnet. Ferner ist eine Übergangszeit festgelegt, die benötigt wird, um den lokalen Sender und/oder Empfänger in einen Energiesparmodus (LPI-Zustand) zu wechseln. Diese Deaktivierungszeit T_{S} beträgt nach dem vorgesehenen Standard 200 µs. Die Aktivierungszeit T_{W} und die Deaktivierungszeit T_{S} sind die laut Standard minimalen Werte und dürfen nicht verkleinert werden, um standardkonform zu bleiben. Die Standardkonformität ist unbedingt notwendig, um eine universelle Kommunikationsfähigkeit der Geräte untereinander zu ermöglichen.

Zur Energieeinsparung einer Ethernet-AVB-Verbindung (Audio Video Bridging Ethernet) schlägt die US 2011/0090914 A1 ein Verfahren vor, bei dem energieeffizientes Netzwerk (EEN - Energy Efficient Networking) ausgehandelt wird. Hierbei wird durch die MAC-Controller und die PHY-Sendeempfänger eine Datenrate der Verbindung ausgehandelt, wobei eine niedrigere Datenrate die durch die Sendeempfänger verbrauchte Leistung reduziert. Um die Verbindung aufrecht zu erhalten und eine aufwendige Abstimmung der PHY-Sendeempfänger zueinander (Training) zu vermeiden, werden regelmäßig Zeitfenster der AVB-Ethernet-Verbindung genutzt, um Konfigurationsparameter und/oder Trainingsinformationen zu aktualisieren. Nachteilig ist hier jedoch, dass die Datenrate vorher bekannt sein muss, um eine entsprechende Einstellmöglichkeit zu gewähren.

Der "Ethernet AVB Technology Assessment Report" (avb-fuller-ethernet-technology-assessment-0709-v01", IEEE DRAFT; AVB-FULLER-ETHERNET-TECHNOLOGY-ASSESSMENT-0709-V01, IEEE-SA, PISCATAWAY, NJ USA, Bd. 802.1, Nr. v01, 14. Juli 2009, Seiten 1-10, XP017642644) beschreibt den Ansatz, das ein energieeffizientes Ethernet bereitzustellen. Hierbei werden Parameter und Konfigurationselemente beschreiben und Vorschläge zur Auslegung dieses Netzwerkes unterbreitet.

Die US 2011/022699 A1 beschreibt, dass eine oder beide Verbindungspartner über eine Ethernet-Verbindung gekoppelt werden können und eine PHY-Vorrichtung umfasse, um ein Wake-up-Intervall zu initiieren. Das PHY-Gerät kann Parameter überwachen, die den Ethernet-Verbindungsstatus anzeigen. Beispielhafte Parameter sind ein Timer, Kommunikation Performance-Metriken und / oder Konfigurationsparameter. Aus einem Low-Power-Modus kann das PHY-Gerät einen Wachzustand ein Leersymbol erzeugen die auf der Überwachung basiert und es zu einem lokalen und / oder einem Remote-MAC kommuniziert. Die lokale und / oder Remote-MAC kann ein Wake-up-Intervall etablieren. Das Wake-up-Intervall umfasst die Synchronisation, Schaltungsanpassung und Aktualisierung der Kommunikationsparameter, die die Steuerung von Rauschunterdrückungsfunktionen ermöglichen. Eine oder beide Verbindungspartner, die auf einen niedrigen Leistungsmodus laufen, gehen nach dem Wake-up-Intervall und / oder in einen aktiven Zustand nach dem Wake-up-Intervall kann über.

Die US 2010/110952 A1 offenbart ein Verfahren zur Vernetzung. Das Verfahren umfasst das Ausführen von einer oder mehreren Schaltungen in einer Netzwerkeinrichtung, dabei wird : ein Netzwerkgerät bestimmt, das aus einem Energiesparbetriebsmodus auf einen höhere Leistungswirkungsweise rekonfiguriert. Die Neukonfiguration eines ersten Teils des Netzwerk-Gerät erfolgt vor dem Hinweis dieser Neukonfiguration bevor es zu einem Link-Partner sendet wird. Desweiteren erfolgt das Senden dieser Angabe. Für den verbleibenden Teil des genannten Netzwerks erfolgt eine Neukonfiguration nachdem die Anzeige sendet wurde.

Aus der EP 2 073 464 A1 ist ein Verfahren bekannt, bei dem die PHY-Sendeempfänger auf verschiedenen Datenkanälen Daten übertragen. Wenn der Datenpaketverkehr aufgegeben wird, können einige Kanäle still geschaltet oder in einen Leerlaufmodus mit geringerem Energieverbrauch zurückgesetzt werden, wobei vorgeschlagen wird, einen oder mehrere der stillen Kanäle zur Übertragung von Steuersignalen zu nutzen.

In einem Ethernet-Netzwerk ermöglichen die Sendeempfänger (Ethernet-Transceiver, PHY-Geräte) in einer ersten Protokollschicht (PHY-Schicht), auch physikalische Schicht oder Bitübertragungsschicht genannt, die eigentliche Kommunikation zwischen verbundenen Netzwerkteilnehmern durch das physikalische Senden und Empfangen der Datenpakete. Die Verbindungssteuerung wird in einer zweiten (der ersten Protokollschicht vorgelagerten) Protokollschicht (MAC-Schicht, Media Access Control), auch Sicherungsschicht oder Data Link genannt, mittels MAC-Steuergeräten ausgeführt. Durch die MAC-Steuergeräte der zweiten Protokollschicht werden Übertragungsrahmen (MAC-Frames) gebildet, in denen die eigentlichen Daten dann bitweise zusammengestellt und zur eigentlichen Datenübertragung an die PHY-Schicht übertragen werden. Eine Datenübertragung erfolgt nur, wenn ein Übertragungsrahmen (MAC-Frame) in der zweiten Protokollschicht zur Übertragung ansteht. Um die Datenverbindung aufrecht zu erhalten, werden IDLE-Pakete bzw. IDLE-Codegruppen gesendet, wenn keine Daten zur Übertragung anstehen. Die eigentlichen Anwendungen (Applikationen), beispielsweise in Steuergeräten, finden sich dann in der zweiten Protokollschicht weiter vorgelagerten Protokollschichten.

Das Ethernet-AVB-Transportprotokoll IEEE 1722 erweckt zunehmend Interesse zum Einsatz in Kraftfahrzeugen. Dieses Protokoll sendet in zyklischen Abständen Daten über ein Ethernet-basiertes Netzwerk. Vor dem eigentlichen Senden der Daten werden die erforderlichen Ressourcen, beispielsweise die Datenrate und/oder die Senderate von dem lokalen Sender zu dem lokalen Empfänger hin reserviert. Dies wird insbesondere mit dem eigenen MSRP-Protokoll (Multiple Stream Reservation Protocol) durchgeführt, welches Bestandteil des AVB-Standards 802.1Qat ist. Hiermit wird unter anderem der Sendezyklus propagiert. Typische Senderaten betragen 125 µs, was deutlich kürzer als der minimale Sendezyklus der Aktivierungszeit T_{W} und der Deaktivierungszeit T_{S} ist.

Traffic-Shaping ist eine weitere Funktion des Ethernet-AVB-Standards, welche durch den Standard Q802.3Qav implementiert wird. Traffic-Shaping bietet die Möglichkeit, den Datenfluss aus einem Knoten des Netzwerkes hinaus zu kontrollieren, wobei eine bestimmte Senderate und/oder Datenrate eingestellt wird. Die Grundidee des Traffic-Shaping liegt darin, zu schnell ankommende Datenpakete von den oberen Protokollschichten zu verzögern, um ein gleichmäßiges Senden zu den physikalischen Sendegeräten der Bitübertragungsschicht einzuleiten. Durch diese Reservierungsnachricht und den darin enthaltenen Parametern wird der Traffic-Shaper der jeweiligen Ausgangsports ein- bzw. umgestellt.

Da die typische Senderate in diesem Modus jedoch höher ist als der minimale Sendezyklus aus Aktivierungszeit T_{W} und Deaktivierungszeit T_{S} lässt sich in diesem Modus kein Strom bzw. keine Energie sparen. Stattdessen kommt es lediglich zu Verzögerungen der Datenpakete. Das Echtzeitverhalten des Ethernet-AVB-Standards wird also durch das Energy Efficient Ethernet (EEE) negativ beeinflusst. Das zugrunde liegende Problem ist die Aktivierungszeit T_{W}, die beim Verlassen des deaktivierten Zustands der lokalen Sender und/oder Empfänger immer benötigt wird, um die lokalen Sender- und Empfänger zu aktivieren. Ein lokaler Sender und/oder Empfänger verlässt nach dem vorgeschlagenen Standard den deaktivierten Zustand erst, wenn ein Übertragungsrahmen (MAC-Frame) zur Verfügung steht, in dem Daten übertragen werden sollen. Da die oberen (vorgelagerten) Schichten des Datenübertragungsprotokolls (Kommunikationsmodell) von der physikalischen Datenübertragung weitgehend entkoppelt sind, kann also stets eine Verzögerung der Aktivierungszeit T_{W} in der Größenordnung von 30 µs entstehen, um beispielsweise den lokalen Sender zu aktivieren. Dann muss ein Übertragungsrahmen warten und wird um diese Zeit verzögert.

Aufgabe der vorliegenden Erfindung ist es, eine Verbesserung der Übertragungsgeschwindigkeit in einem Ethernet-AVB-Transportprotokoll bei gleichzeitiger Realisierung eines Stromsparmodus zu erreichen.

Diese Aufgabe wird bei einem Verfahren der eingangs genannten Art erfindungsgemäß mit den Merkmalen des Anspruchs 1 gelöst. Dabei ist insbesondere vorgesehen, dass aufgrund einer Reservierungsnachricht und dem Einstellen von Senderate und/oder Datenrate die lokalen Sender und/oder Empfänger der Knoten, vorzugsweise entlang der Übertragungsstrecke der Daten, aktiviert werden, bevor die Daten in den Übertragungsrahmen (MAC-Frame) eingegeben und an den lokalen Sender übertragen, d. h. in die Bitübertragungsschicht übergeben, werden.

Hierbei wird erfindungsgemäß ausgenutzt, dass das Senden von Daten entsprechend dem Ethernet-AVB-Transportprotokoll eine vorangehende Reservierung des physikalischen Übertragungskanals erfordert, wobei auch die Traffic-Shaper der Ausgangsports eingestellt werden, d. h. deren Datenrate und/oder Senderate. Somit ist den lokalen Sendern und Empfängern in dem Ethernet-Netz entlang der Übertragungstrecke zwischen dem Ausgangssender und dem Zielempfänger die Zykluszeit der zu sendenden Daten bekannt. Soll also ein Datenpakte ausgesendet werden, so kann der lokale Sender und/oder Empfänger schon vorher aus dem Energiespar-Modus (LPI) geholt werden, bevor das Datenpaket wirklich zur Übertragung ansteht und in den Übertragungsrahmen (MAC-Frame) eingestellt wird, da aus der Reservierung der geplante Zeitpunkt der Übertragung bekannt ist. Sofern dies mindestens um die Aktivierungszeit T_{W} vorgezogen vor dem Einstellen der Daten in den Übertragungsrahmen erfolgt, lässt sich eine Übertragung ohne zeitliche Verzögerung verwirklichen.

Durch das erfindungsgemäße Verfahren lässt sich also die durch die Aktivierungszeit verursachte Verzögerung in einem AVB-Ethernet-Transportprotokoll verringern oder im besten Fall vermeiden, so dass die angeforderten und reservierten Dienstgüte (Latenz, Jitter) der zu übertragenden Daten eingehalten werden können.

Gemäß einer besonders bevorzugten Ausführungsform des vorgeschlagenen Verfahrens kann das Aktivieren des lokalen Senders und/oder Empfängers eines Knotens durch Beschreiben eines geeigneten MAC- oder PHY-Registers erfolgen, wodurch der MAC-Protokollschicht oder der Bit-Übertragungsschicht (PHY-Schicht) suggeriert wird, dass Daten zur Übertragung anstehen. Dies hat zur Folge, dass möglicherweise deaktivierte lokale Sender und/oder Empfänger (PHY-Geräte) aus einem deaktivierten Modus (LPI, Energiesparmodus) geweckt bzw. aktiviert werden. Dieses Verfahren ermöglicht einen besonders direkten Einfluss auf das Zustandssignal, welches den lokalen Sender und/oder Empfänger in den LPI-Modus (Energiesparmodus) versetzt bzw. ihn daraus wieder weckt, d. h. ihn aktiviert.

Alternativ oder zusätzlich kann das Aktivieren des lokalen Senders und/oder Empfängers eines Knotens durch einen Timer erfolgen, der die Zeit vorgibt, wann ein lokaler Sender und/oder Empfänger nach dem Beginn einer Deaktivierung wieder aktiviert wird. Nach dem Ablauf des Timers verlässt der lokale Sender- oder Empfänger den LPI-Modus (Energiesparmodus) automatisch wieder. Da aus der Reservierungsnachricht die geplante Übertragungszeit bekannt ist, kann der Timer so eingestellt werden bzw. sich automatisch so einstellen, dass er gerade um die Aktivierungszeit T_{W} vor dem geplanten Sendezeitpunkt abläuft, so dass der lokale Sender und/oder Empfänger zum Übertragungszeitpunkt für die Übermittlung der Daten bereit sind.

In einer weiteren möglichen Ausführungsform des erfindungsgemäß vorgeschlagenen Verfahrens, die alternativ oder zusätzlich zu den vorgenannten Ausführungsformen realisiert werden kann, kann vorgesehen sein, dass das Aktivieren des lokalen Senders und/oder Empfängers eines Knotens durch ein Dummy-Datenpaket erfolgt, das vor dem Übertragen der Daten ausgesendet wird, wobei die Aussendung ggf. auf ein Einstellen der Daten des Dummy-Datenpaketes in einen Übertragungsrahmen (MAC-Frame) beschränkt sein kann, um den lokalen Sender und/oder Empfänger aus dem Energiesparmodus (LPI-Modus) zu wecken.

In jedem der vorbeschriebenen Fälle ist es besonders sinnvoll, dass das Aktivieren des lokalen Senders und/oder Empfängers eines Knotens mindestens um die Aktivierungszeit T_{W} vor einem geplanten Sendezeitpunkt, der durch die Reservierungsnachricht und/oder das Einstellen der Senderate und/oder Datenrate bekannt ist, erfolgt, um eine Zeitverzögerung bei der Übertragung möglichst vollständig zu vermeiden.

Bei dem Aktivieren des lokalen Senders und/oder Empfängers durch ein Dummy-Datenpaket kann es besonders vorteilhaft sein, das Aktivieren des lokalen Senders und/oder Empfängers mindestens um die Summe der Aktivierungszeit T_{W} und der Übertragungsdauer des Dummy-Datenpaketes vor dem geplanten Sendezeitpunkt, der durch die Reservierungsnachricht und das Einstellen der Senderate und/oder der Datenrate bekannt ist, erfolgt, um eine Verzögerung bei der Datenübertragung zu vermeiden.

Ferner kann bei einer Weiterentwicklung des vorgeschlagenen Verfahrens vorgesehen sein, dass das Dummy-Datenpaket durch eine Anwendung (Applikation) insbesondere einer höheren Schicht als die der Bitübertragungsschicht vorgelagerten Schicht, d. h. der MAC-Schicht, erzeugt und an die der Bitübertragungsschicht vorgelagerte Schicht, d. h. die MAC-Schicht, übertragen wird, in welcher das Dummy-Datenpaket in einen Übertragungsrahmen eingefügt wird. Dies führt dann unmittelbar zu einem Aktivieren des lokalen Senders und/oder Empfängers in der Bitübertragungssicht. Hierdurch ist es möglich, ohne Eingriff in die physikalische Funktionsweise der Datenübertragung ein derartiges Dummy-Datenpaket durch vorgelagerte Applikationsschichten zu steuern, die durch den Hersteller der Knoten bzw. Steuergeräte frei vorgegeben werden können, ohne dass Standards der eigentlichen Datenübertragung verändert werden müssen.

Um im Falle der Verwendung von Dummy-Datenpaketen zur Aktivierung der lokalen Sender und/oder Empfänger einen zusätzlichen Datenverkehr in dem Kommunikationsnetz zu vermeiden und keine Leitungsbelastung hervorzurufen, die ihrerseits Energie kostet, kann erfindungsgemäß vorgesehen sein, dass das Dummy-Datenpaket in dem lokalen Sender und/oder Empfänger verworfen und nicht zu einem anderen Knoten übertragen wird, d. h. nicht auf das Netzwerk zur Übertragung gelegt wird. Dazu kann das Dummy-Datenpaket eine spezielle Kodierung enthalten, die zu einem Verwerfen des Datenpaketes in dem lokalen Sender und/oder Empfänger nach dessen Aktivierung führt, ohne dass dieses Datenpaket durch ein PHY-Geräte, beispielsweise einen Transceiver (Sendeempfänger) als lokalen Sender und/oder Empfänger ausgesendet wird.

Bei den lokalen Sendern und/oder Empfängern handelt es sich üblicherweise um sogenannte Transceiver-Geräte, die gleichzeitig Sender und Empfänger sind, so dass auch ein Empfänger dadurch aktiviert werden kann, dass dem vermeintlichen Datenempfänger ein Datenpaket zur Übertragung übermittelt wird, welches dann vor einer Übertragung insbesondere verworfen werden kann, aber zur Aktivierung des Transceivers aus einem Energiesparmodus (LPI-Modus) führt.

Um das Übertragen der Reservierungsnachrichten unabhängig von einer möglichen Aktivierung und/oder Deaktivierung der lokalen Sender oder Empfänger durchführen zu können, kann erfindungsgemäß vorgeschlagen sein, dass die Übertragung der Daten in dem Ethernet-basierten Netzwerk und das Übertragen von Reservierungsnachrichten auf unterschiedlichen Übertragungskanälen erfolgt.

Die Erfindung betrifft ferner ein Steuergerät mit einem lokalen Sender und/oder Empfänger und eine Recheneinheit, wobei die Recheneinheit durch Programmcodemittel zum Übertragen von Daten mit einem Ethernet-AVB-Transportprotokoll zwischen Knoten, insbesondere Steuergeräten, eines Kraftfahrzeugs eingerichtet ist. Erfindungsgemäß ist die Recheneinheit durch Programmcodemittel zur Durchführung des Verfahrens nach einem der Ansprüche 1 bis 9.

Entsprechend bezieht sich die Erfindung auch auf ein Computerprogrammprodukt mit Programmcodemitteln, die dazu geeignet sind, bei Ausführung auf einer Recheneinheit die Recheneinheit zur Durchführung des Verfahrens nach einem der Ansprüche 1 bis 9.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen. Es zeigen:
- Fig. 1: den normalen Ablauf eines Ethernet-AVB-Transport-protokolls unter Verwendung des Energy Efficient Ethernet in einer ersten Realisierung;
- Fig. 2: den normalen Ablauf eines Ethernet-AVB-Transport-protokolls unter Verwendung des Energy Efficient Ethernet in einer zweiten Realisierung und
- Fig. 3: den Ablauf eines erfindungsgemäßen Ethernet-AVB-Transportprotokolls in einem Energy Efficient Ethernet mit vorzeitiger Aktivierung der lokalen Sender und/oder Empfänger gemäß einer Ausführungsform.

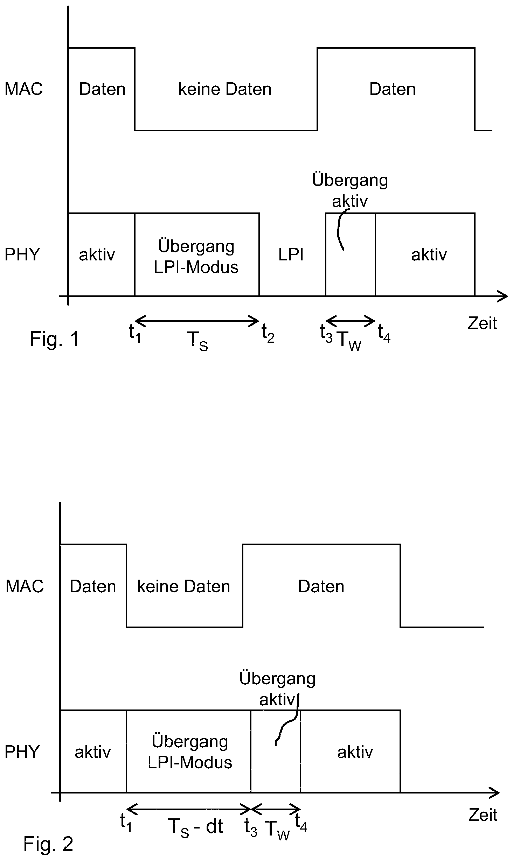

Fig. 1 zeigt den normalen zeitlichen Abstand der Zustandswechsel zwischen dem Energiesparmodus (LPI) und dem Normalzustand (aktiv) der lokalen Sender- und Empfänger (PHY-Geräte) in der Bitübertragungsschicht (PHY) und den zugehörigen zeitlichen Ablauf der Übertragungsrahmen (MAC-Frame) in der MAC-Schicht.

Solange in der MAC-Schicht Daten zur Übertragung in den Übertragungsrahmen eingestellt werden, was durch einen hohen Zustand in der MAC-Schicht mit der Kennzeichnung "Daten" dargestellt ist, d. h. einen aktiven Übertragungsrahmen (MAC-Frame). In diesem Zustand sind also Daten in den Übertragungsrahmen (MAC-Frame) eingestellt. Solange sich Daten in dem Übertragungsrahmen befinden, ist der Sender (PHY) der Bitübertragungssicht aktiv.

Zum Zeitpunkt t₁ sind die in der MAC-Schicht anstehenden Daten vollständig übertragen, wobei bis zu dem Zeitpunkt t₃ keine Daten mehr zur Übertragung anstehen. Im Rahmen des Energy Efficient Ethernet geht der Ethernet-Transceiver (PHY) - im Falle des sendenden Knotens also mit seiner Sendefunktion - in einen Energiesparmodus (LPI-Modus, Low Power Idle) über. Hierfür steht ihm im Rahmen des Standards IEEE 802.3az eine Deaktivierungszeit T_{S} von 200 µs zur Verfügung, so dass der Ethernet-Transceiver PHY den Energiesparmodus, in welchem der Ethernet-Transceiver PHY deaktiviert ist, zum Zeitpunkt t₂ erreicht.

Danach befindet sich der Ethernet-Transceiver PHY in seinem Ruhemodus (LPI), bis zum Zeitpunkt t₃ in der MAC-Schicht neue Daten in einen Übertragungsrahmen (MAC-Frame) eingestellt werden. Zu diesem Zeitpunkt beginnt der Ethernet-Transceiver (PHY, Sendeempfänger) mit einem Übergang in den aktiven Normalzustand, der gemäß dem Standard IEEE 802.3az für das Energy Efficient Ethernet nach einer Aktivierungszeit T_{W} von 30 µs zum Zeitpunkt t₄ erreicht ist. Danach werden die in der MAC-Schicht anstehenden und in den Übertragungsrahmen (MAC-Frame) eingestellten Daten durch den aktiven Ethernet-Transceiver (PHY) übertragen. Die in der MAC-Schicht zur Übertragung anstehenden Daten müssen in dem Übertragungsrahmen also die Aktivierungszeit T_{W} warten, bis eine Übertragung erfolgt. Hierdurch ergibt sich eine Verzögerung der Übertragung von 30 µs.

Fig. 1 stellt den Zustand gemäß dem bestehenden Standard IEEE 802.3az für das Energy Efficient Ethernet (EEE) dar.

In Fig. 2 ist ein ähnlicher Zustandswechsel nach dem Standard IEEE 802.3az für das Energy Efficient Ethernet dargestellt, bei dem ein Ethernet-Transceiver (PHY) in der Bitübertragungsschicht aus einem aktiven Normalzustand in einen Energiesparmodus (deaktivierten Zustand) wechselt, der als LPI-Zustand bezeichnet ist. Auch hier beginnt der Ethernet-Transceiver PHY nach abgeschlossener Übertragung der Daten in dem Übertragungsrahmen der MAC-Schicht zum Zeitpunkt t₁ damit, in den Energiesparmodus überzugehen. Bevor dieser nach der Deaktivierungszeit T_{S} erreicht ist, stehen in der MAC-Schicht allerdings wieder Daten zur Übertragung an, so dass diese in einen Übertragungsrahmen (MAC-Frame) eingestellt werden. Der Übergang in den Energiesparmodus (LPI-Modus) wird daher zum Zeitpunkt T_{S}-dt abgebrochen und der Aktivierungsvorgang des Ethernet-Transceivers PHY wird zum Zeitpunkt t₃, wenn Daten in den Übertragungsrahmen der MAC-Schicht eingestellt werden, wieder begonnen.

Unabhängig davon, ob der Energiesparmodus (deaktivierte Zustand) des Ethernet-Transceivers PHY tatsächlich erreicht war, wird die Aktivierungszeit T_{W} benötigt, um in einem aktiven Normalzustand des Ethernet-Transceivers (PHY) die Übertragung der im Übertragungsrahmen der MAC-Schicht anstehenden Daten zu beginnen. Bei dem in Fig. 2 dargestellten Zyklus wird also überhaupt kein Strom gespart, da der Energiesparmodus des Ethernet-Transceivers PHY nicht erreicht wird. Dennoch entsteht bei der Übertragung der Daten die Verzögerung um die Aktivierungszeit T_{W}, die gemäß dem Standard IEEE 802.3az 30 µs beträgt.

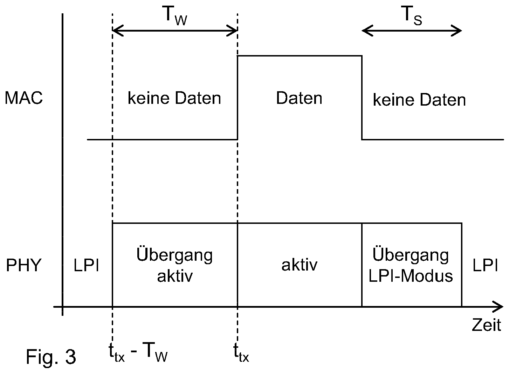

Hier setzt nun das Verfahren gemäß der vorliegenden Erfindung an, das gemäß Fig. 3 erläutert wird.

Gemäß dem vorgeschlagenen Verfahren wird ausgenutzt, dass die Zykluszeiten der zu übertragenden Datenströme den jeweiligen Netzwerkknoten durch die Reservierung nach dem Ethernet-AVB-Protokoll bekannt sind. Daher ist dem Knoten jeweils der geplante Sendezeitpunkt tₜₓ bekannt, zu dem das nächste Datenpaket in der MAC-Schicht in den Übertragungsrahmen (MAC-Frame) eingestellt werden soll. Zu diesem Zeitpunkt soll also ein Paket des Datenstroms über den Ethernet-Transceiver (PHY) in dem Datennetz versendet werden. Dann wird, auch wenn in der MAC-Schicht zu diesem Zeitpunkt eigentlich keine Nutzdaten zur Übertragung anstehen, der Ethernet-Transceiver (PHY) bereits zum Zeitpunkt tₜₓ-T_{w} aus dem Ruhezustand bzw. Energiesparmodus (LPI) geweckt bzw. aktiviert, so dass die Aktivierungszeit T_{W} vor dem geplanten Sendezeitpunkt tₜₓ erfolgt. Die Aktivierung des Ethernet-Transceivers (PHY) wird also um die Aktivierungszeit T_{W} vorgezogen, so dass das Datenpaket bei der Einstellung in den Übertragungsrahmen (MAC-Frame) der MAC-Schicht sofort durch den aktiven Ethernet-Transceiver PHY im aktiven Normalzustand ohne Verzögerung übertragen werden kann.

Die Aktivierung des Ethernet-Transceivers (PHY) zum Zeitpunkt tₜₓ-T_{W} kann beispielsweise durch Beschreiben eines geeigneten MAC-oder PHY-Registers geschehen, welches die Aktivierung bzw. Deaktivierung des Ethernet-Transceivers (PHY) in der Bitübertragungsschicht (PHY-Schicht) des Ethernet-Transportprotokolls steuert. Dabei wird also direkt auf das Zustandssignal zugegriffen, welches den Ethernet-Transceiver (PHY) in den Energiesparmodus (LPI-Modus) versetzt bzw. ihn daraus wieder weckt.

Nach Übertragung der Daten in den Übertragungsrahmen der MAC-Schicht geht der Ethernet-Transceiver (PHY) dann während der Deaktivierungszeit T_{S} wieder in den Energiesparmodus (LPI-Modus) über, bis das nächste geplante Datenpaket zur Übertragung ansteht, wobei auch hier die Aktivierung wieder um die Aktivierungszeit T_{W} vorgezogen wird.

Durch diesen in Fig. 3 dargestellten Ablauf wird also gewährleistet, dass auch bei Verwendung eines Energy Efficient Ethernet keine zusätzliche Verzögerung und kein Jitter bei der Übertragung des Datenstroms durch die Aktivierungszeit T_{W} bei der Datenübertragung im Rahmen des Ethernet-AVB-Transportprotokolls nach dem Standard IEEE 1722 auftritt.

Eine andere oder ergänzende Ausführungsform des vorgeschlagenen Verfahrens besteht darin, in dem Knoten einen Timer zu betreiben, der die Zeit festlegt, für welche sich der Ethernet-Transceiver (PHY) im Energiesparmodus (LPI-Zustand) befindet. Nach Ablauf der in dem Timer eingestellten Zeit verlässt der Ethernet-Transceiver den Energiesparmodus automatisch wieder, so dass zum geplanten Übertragungszeitpunkt tₜₓ der Ethernet-Transceiver in einem aktiven Normalzustand ist und die Daten sofort bei Einstellen in den Übertragungsrahmen der MAC-Schicht übertragen kann. Bei einem bekannten Übertragungszeitpunkt tₜₓ kann der Timer also so eingestellt werden, dass er zum Zeitpunkt tₜₓ -T_{W} abläuft und der Ethernet-Transceiver damit zum geplanten Übertragungszeitpunkt tₜₓ zur Datenübertragung bereit ist.

Eine weitere Möglichkeit zur Aktivierung des Ethernet-Transceivers aus dem Energiesparmodus (LPI) besteht darin, den Ethernet-Transceiver (PHY) dadurch zu aktivieren, dass rechtzeitig vor den geplanten Sendezeiten tₜₓ ein Dummy-Datenpaket in den Übertragungsrahmen (MAC.Frame) der MAC-Schicht eingestellt wird. Vorzugsweise findet dies zum Zeitpunkt t tₜₓ-t_{DUMMY}-T_{W} statt, wobei die Zeit t_{DUMMY} die Übertragungsdauer des Dummy-Paketes ist.

Dieses Dummy-Datenpaket dient lediglich dazu, den Ethernet-Transceiver (PHY) rechtzeitig aus dem Energiesparmodus (LPI-Modus) zu aktivieren, ohne dass dabei Änderungen an dem Energie Efficient Ethernet-Mechanismus notwendig wären. Diese Dummy-Pakete lassen sich von einer Applikation in einer der MAC-Schicht vorgelagerten Protokollschicht realisieren, die durch die Hersteller oder Nutzer des Ethernet-Protokolls durch geeignete Applikationen entsprechend angepasst werden können. Daher ist erfindungsgemäß eine Applikation vorgesehen, die geeignete Dummy-Datenpakete generiert und an die MAC-Schicht übergibt, welche diese Dummy-Daten dann, ohne dass eigentliche Daten (Nutzdaten) vorliegen, in einen Übertragungsrahmen einstellt, was unmittelbar dazu führt, dass der Ethernet-Transceiver (PHY) aus einem Ruhezustand im Energiesparmodus (LPI) aktiviert wird. Der Inhalt des Datenpaketes ist dabei irrelevant und wird vorzugsweise so gewählt, dass auf der Gegenseite des übertragenden Datenpakets keine Reaktionen ausgelöst werden.

Gemäß einer besonders bevorzugten Möglichkeit zur Generierung eines Dummy-Datenpakets kann auch vorgesehen sein, dass die Definition des Dummy-Datenpakets dazu führt, dass diese Daten in dem Ethernet-Transceiver (PHY), d. h. in der Bitübertragungsschicht, vor einem Aussenden wieder verworfen werden, ohne dass eine das Netzwerk belastende Datenübertragung stattfindet. Dies könnte beispielsweise im Rahmen einer Anpassung des aktuellen Standards erfolgen.

Insgesamt wird durch das vorgeschlagene Verfahren also eine effiziente Möglichkeit zur Energieeinsparung von Sende- und Empfangsenergie in Knoten vorgeschlagen, ohne dass die Energieeinsparung zu einer zeitlichen Verzögerung der Übertragung und einem Jitter, d. h. einer Zeitverzögerung, bei der Datenübertragung führt.

## Patentansprüche

1. Verfahren zum Übertragen von Daten mit einem Ethernet-AVB-Transportprotokoll zwischen Knoten eines Kraftfahrzeugs, bei dem in zyklischen Abständen Daten über ein Ethernet-basiertes Netzwerk durch Eingeben der Daten in einen Übertragungsrahmen (MAC) und Weiterleitung an lokale Sender (PHY) ausgesendet werden und bei dem vor einem Senden der Daten die für das Übertragen der Daten erforderlichen Ressourcen mittels Reservierungsnachrichten eines eigenen Protokolls reserviert werden, wobei der Datenfluss aus einem Knoten auf eine bestimmte Senderate und/oder Datenrate eingestellt wird, und bei dem die lokalen Sender und Empfänger (PHY) eines Knotens in Nicht-Nutzungsperioden, in denen keine Daten zu übertragen sind, deaktiviert werden und sofern in einem Übertragungsrahmen (MAC) Daten zur Übertragung anstehen, wieder aktiviert werden, wobei die lokalen Sender und Empfänger (PHY) nach einer Aktivierungszeit (T_{W}) zur Übertragung zur Verfügung stehen, **dadurch gekennzeichnet, dass** aufgrund einer Reservierungsnachricht und dem Einstellen der Senderate und/oder Datenrate die lokalen Sender und/oder Empfänger der Knoten aktiviert werden.

2. Verfahren nach Anspruch 1, **dadurch gekennzeichnet, dass** das Aktivieren des lokalen Senders und/oder Empfängers (PHY) eines Knotens durch Beschreiben eines geeigneten MAC- oder PHY-Registers erfolgt.

3. Verfahren nach Anspruch 1 oder 2, **dadurch gekennzeichnet, dass** das Aktivieren des lokalen Senders und/oder Empfängers (PHY) eines Knotens durch einen Timer erfolgt, der die Zeit vorgibt, wann ein lokaler Sender und/oder Empfänger (PHY) nach dem Beginn einer Deaktivierung wieder aktiviert wird.

4. Verfahren nach einem der vorhergehenden Ansprüche, **dadurch gekennzeichnet, dass** das Aktiveren des lokalen Senders und/oder Empfängers (PHY) eines Knotens durch ein Dummy-Datenpaket erfolgt, das vor dem Übertragen der Daten ausgesendet wird.

5. Verfahren nach einem der vorhergehenden Ansprüche, **dadurch gekennzeichnet, dass** das Aktiveren des lokalen Senders und/oder Empfängers (PHY) eines Knotens mindestens um die Aktivierungszeit (T_{W}) vor einem geplanten Sendezeitpunkt erfolgt.

6. Verfahren nach Anspruch 4 und 5, **dadurch gekennzeichnet, dass** das Aktiveren des lokalen Senders und/oder Empfängers (PHY) eines Knotens mindestens um die Summe der Aktivierungszeit (T_{W}) und der Übertragungsdauer des Dummy-Datenpakets vor einem geplanten Sendezeitpunkt erfolgt.

7. Verfahren nach einem der Ansprüche 4 oder 6, **dadurch gekennzeichnet, dass** das Dummy-Datenpaket durch eine Applikation erzeugt und an eine vorgelagerte Schicht übergeben wird.

8. Verfahren nach einem der Ansprüche 4, 6 oder 7, **dadurch gekennzeichnet, dass** das Dummy-Datenpaket in dem lokalen Sender und/oder Empfänger verworfen und nicht zu einem anderen Knoten übertragen wird.

9. Verfahren nach einem der vorhergehenden Ansprüche, **dadurch gekennzeichnet, dass** die Übertragung der Daten in dem Ethernet-basierten Netzwerk und das Übertragen von Reservierungsnachrichten auf unterschiedlichen Übertragungskanälen erfolgt.

10. Steuergerät mit einem lokalen Sender und/oder Empfänger und einer Recheneinheit, wobei die Recheneinheit durch Programmcodemittel zum Übertragen von Daten mit einem Ethernet-AVB-Transportprotokoll zwischen Knoten eines Kraftfahrzeugs eingerichtet ist, **dadurch gekennzeichnet, dass** die Recheneinheit durch Programmcodemittel zur Durchführung des Verfahrens nach einem der Ansprüche 1 bis 9 eingerichtet ist.

11. Computerprogrammprodukt mit Programmcodemitteln, die dazu geeignet sind, bei Ausführung auf einer Recheneinheit die Recheneinheit zur Durchführung des Verfahrens nach einem der Ansprüche 1 bis 9 einzurichten.

## Claims

1. Method for transmitting data using an Ethernet AVB transport protocol between nodes of a motor vehicle, in which data are transmitted at cyclic intervals via an Ethernet-based network by inputting the data into a transmission frame (MAC) and forwarding to local transmitters (PHY) and in which, prior to the data being sent, the resources that are necessary for the transmission of the data are reserved by means of reservation messages from a dedicated protocol, wherein the flow of data from a node is set to a particular transmission rate and/or data rate, and in which the local transmitters and receivers (PHY) of a node are deactivated in non-use periods, in which no data need to be transmitted, and are activated again provided that data are pending transmission in a transmission frame (MAC), wherein the local transmitters and receivers (PHY) are available for transmission following an activation time (T_{W}), **characterized in that** the local transmitters and/or receivers of the nodes are activated on the basis of a reservation message and the setting of the transmission rate and/or data rate.

2. Method according to Claim 1, **characterized in that** the local transmitter and/or receiver (PHY) of a node is/are activated by writing to a suitable MAC or PHY register.

3. Method according to Claim 1 or 2, **characterized in that** the local transmitter and/or receiver (PHY) of a node is/are activated by a timer that prescribes the time when a local transmitter and/or receiver (PHY) is/are activated again following the beginning of deactivation.

4. Method according to one of the preceding claims, **characterized in that** the local transmitter and/or receiver (PHY) of a node is/are activated by a dummy data packet that is transmitted prior to the transmission of the data.

5. Method according to one of the preceding claims, **characterized in that** the local transmitter and/or receiver (PHY) of a node is/are activated prior to a scheduled transmission time by at least the activation time (T_{W}) .

6. Method according to Claims 4 and 5, **characterized in that** the local transmitter and/or receiver (PHY) of a node is/are activated prior to a scheduled transmission time by at least the sum of the activation time (T_{W}) and the transmission period for the dummy data packet.

7. Method according to either of Claims 4 and 6, **characterized in that** the dummy data packet is produced by an application and transferred to an upstream layer.

8. Method according to one of Claims 4, 6 and 7, **characterized in that** the dummy data packet is rejected in the local transmitter and/or receiver and is not transmitted to another node.

9. Method as claimed in one of the preceding claims, **characterized in that** the data are transmitted in the Ethernet-based network and reservation messages are transmitted on different transmission channels.

10. Controller having a local transmitter and/or receiver and a computation unit, wherein the computation unit is set up by program code means for transmitting data using an Ethernet AVB transport protocol between nodes of a motor vehicle, **characterized in that** the computation unit is set up by program code means for carrying out the method according to one of Claims 1 to 9.

11. Computer program product having program code means that are suited to setting up the computation unit for carrying out the method according to one of Claims 1 to 9 when said program code means are executed on a computation unit.

## Revendications

1. Procédé pour transmettre des données au moyen d'un protocole de transport AVB Ethernet entre des noeuds d'un véhicule à moteur, dans lequel des données sont émises à des intervalles cycliques par l'intermédiaire d'un réseau Ethernet par introduction des données dans une trame de transmission (MAC) et transfert à des émetteurs locaux (PHY) et dans lequel, avant une émission des données, les ressources nécessaires pour la transmission des données sont réservées au moyen de messages de réservation d'un protocole distinct, dans lequel le flux de données provenant d'un noeud est ajusté à un débit d'émission et/ou un débit de données défini, et dans lequel les émetteurs et les récepteurs locaux (PHY) d'un noeud sont désactivés lors de périodes de non-utilisation pendant lesquelles aucune données n'est à transmettre et sont de nouveau activés lorsque des données à transmettre sont présentes dans des trames de transmission (MAC), dans lequel les émetteurs et les récepteurs locaux (PHY) sont disponibles pour une transmission après un temps d'activation (T_{W}), caractérisé en ce les émetteurs et/ou les récepteurs des noeuds sont activés sur la base d'un message de réservation et de l'établissement du débit d'émission et/ou du débit de données.

2. Procédé selon la revendication 1, **caractérisé en ce que** l'activation de l'émetteur et/ou du récepteur local (PHY) d'un noeud s'effectue par l'intermédiaire de la description d'un registre MAC ou PHY approprié.

3. Procédé selon la revendication 1 ou 2, **caractérisé en ce que** l'activation de l'émetteur et/ou du récepteur local (PHY) d'un noeud s'effectue par l'intermédiaire d'un temporisateur qui prédéfinit le temps lors duquel un émetteur et/ou un récepteur local (PHY) est de nouveau activé après le début d'une désactivation.

4. Procédé selon l'une quelconque des revendications précédentes, **caractérisé en ce que** l'activation de l'émetteur et/ou du récepteur local (PHY) d'un noeud s'effectue par l'intermédiaire d'un paquet de données fictif qui est émis avant la transmission des données.

5. Procédé selon l'une quelconque des revendications précédentes, **caractérisé en ce que** l'activation de l'émetteur et/ou du récepteur local (PHY) d'un noeud s'effectue au moins un temps d'activation (T_{W}) avant un instant d'émission prévu.

6. Procédé selon les revendications 4 et 5, **caractérisé en ce que** l'activation de l'émetteur et/ou du récepteur local (PHY) d'un noeud s'effectue au moins un temps correspondant à la somme du temps d'activation (T_{W}) et de la durée de transmission du paquet de données fictif avant un instant d'émission prévu.

7. Procédé selon l'une quelconque des revendications 4 ou 6, **caractérisé en ce que** le paquet de données fictif est généré par une application et est transféré à une couche située en amont.

8. Procédé selon l'une quelconque des revendications 4, 6 ou 7, **caractérisé en ce que** le paquet de données fictif est rejeté dans l'émetteur et/ou le récepteur local et n'est pas transmis à un autre noeud.

9. Procédé selon l'une quelconque des revendications précédentes, **caractérisé en ce que** la transmission des données s'effectue dans le réseau Ethernet et **en ce que** la transmission de messages de réservation s'effectue sur des canaux de transmission différents.

10. Appareil de commande comportant des émetteurs et/ou des récepteurs locaux et une unité de calcul, dans lequel l'unité de calcul est conçue pour transmettre des données au moyen d'un protocole de transport AVB Ethernet entre des noeuds d'un véhicule à moteur, **caractérisé en ce que** l'unité de calcul est conçue pour mettre en oeuvre le procédé selon l'une quelconque des revendications 1 à 9, par l'intermédiaire de moyens à codes de programmes.

11. Produit de programme d'ordinateur comportant des moyens à codes de programmes qui sont conçus, lors de leur exécution sur une unité de calcul, pour ordonner à l'unité de commande de mettre en oeuvre le procédé selon l'une quelconque des revendications 1 à 9.
